## Europäisches Patentamt
## European Patent Office
## Office européen des brevets

(19)

(11) Veröffentlichungsnummer: **0 029 499**
**B1**

(12)

# EUROPÄISCHE PATENTSCHRIFT

(45) Veröffentlichungstag der Patentschrift: 04.07.84

(51) Int. Cl.³: **G 01 B 7/00, G 01 B 3/00**

(21) Anmeldenummer: **80106209.2**

(22) Anmeldetag: **11.10.80**

(54) Einrichtung zur Messwerterfassung an Prüflingen.

(30) Priorität: 24.11.79 DE 2947394

(43) Veröffentlichungstag der Anmeldung:
03.06.81 Patentblatt 81/22

(45) Bekanntmachung des Hinweises auf die Patenterteilung:
04.07.84 Patentblatt 84/27

(84) Benannte Vertragsstaaten:
CH FR GB IT LI SE

(56) Entgegenhaltungen:
DE - A - 2 820 813
DE - A - 2 841 548
FR - A - 2 135 461
FR - A - 2 298 084
FR - A - 2 326 681
FR - A - 2 384 230

(73) Patentinhaber: ERNST LEITZ WETZLAR GMBH
Ernst-Leitz-Strasse 30 Postfach 20 20
D-6330 Wetzlar 1 (DE)

(72) Erfinder: Willhelm, Jörg, Dr.
Westerwaldstrasse 46
D-6330 Wetzlar-Nauborn (DE)
Erfinder: Jacoby, Hans-Dieter, Dr.
Finkenweg 9
D-6332 Werdorf (DE)
Erfinder: Schuster, Erich
Friedensstrasse 10
D-6331 Hüttenberg (DE)
Erfinder: Prinz, Dieter
Weingartenstrasse 1
D-6301 Biebertal 1 (DE)

## Beschreibung

Die Erfindung betrifft eine Einrichtung zur Meßwerterfassung an Prüflingen unter Verwendung eines relativ zu diesem bewegten mechanischen, aus einem gehäusefesten und einem mit diesem über ein Knickgelenk verbundenen bewegbaren Teil bestehenden Tasters, mindestens eines Meßwertgebers sowie mindestens eines kraft- oder beschleunigungsaufnehmenden Sensors, der im Augenblick des Zusammentreffens von Taster und Prüfling ein Auslössignal erzeugt, das zum Festhalten des im Augenblick des Zusammentreffens vorhandenen Meßwertes am Meßwertgeber benutzt wird.

Aus der FR—A—2 326 681 ist eine Einrichtung zur Meßwerterfassung an Prüflingen bekannt, die Sensoren zeigt, die unterschiedlichen Lagerstellen eines Knickgelenks zugeordnet und darüber hinaus zumindestens teilweise außen am gehäusefesten Teil vorgesehen sind. Die Sensoren sind zwischen Lagerstellen angeordnet, die aus in einem Kunststoffpart des Gehäuses eingelassenen Kugeln bestehen und die mit einem zylindrischen Teil eines Taststabes zusammenwirken, die zwischen einem sphärischen und einem zylindrischen Lagerelement dieses Taststabes vorgesehen sind.

Nachteil dieser Einrichtung ist, daß die Sensoren erst nach dem Antastvorgang und unter einem Meßdruck stehend Signale zum Festhalten eines Meßwertes liefern.

Zu einer wie oben genannten Meßwerterfassung an Prüflingen ist auch aus der DE—A—27 12 181 ein Tastsystem bekannt, dessen bewegbares Teil aus zwei fest miteinander verbundenen Stücken besteht, zwischen denen ein oder mehrere auf Zug und Druck empfindliche Meßelemente angeordnet sind und bei welchem die Verbindung zwischen gehäusefestem und beweglichem Teil über ein Gelenkglied bewirkt ist, welches die Lage des beweglichen Teils zum gehäusefesten Teil hochgenau festlegt.

Es ist ferner aus der DE—A—28 20 813 eine Einrichtung zur Meßwerterfassung an Prüflingen unter Verwendung eines relativ zu diesem bewegten mechanischen Tasters sowie mindestens eines Meßwertgebers bekannt, bei der im Augenblick des Zusammenstreffens von Taster und Prüfling ein Signal zum Festhalten des im Augenblick des Zusammentreffens vorhandenen Meßwertes am Meßwertgeber in einem Speicher erzeugt wird und bei welcher der Taster aus einem gehäusefesten und einem relativ zu diesem beweglichen, einstückigen Teil besteht, wobei an diesem beweglichen Teil wenigstens ein Schwingungs- oder Beschleunigungsaufnehmer außen angesetzt ist.

Nachteilig ist, daß beide letztgenannten Einrichtungen wegen ihrer hohen Empfindlichkeit durch nicht aus der Antastung herrührende Impulse störbar sind. Zur Unterscheidung zwischen Stör- und Antastimpuls muß daher entweder zusätzlich ein die Antastung kennzeichnender Kennimpuls erzeugt werden oder eine Diskirminatorschaltung zur Selektion der sich in ihrem Schwingungsverlauf unterscheidenen Antast- bzw. Störimpulse vorgesehen sein. Beide Maßnahmen bedeuten einen erhöhten technischen Aufwand mit entsprechenden Kosten.

Es ist daher Aufgabe der vorliegenden Erfindung, eine Einrichtung anzugeben, die unter Beibehaltung der hohen Antastempfindlichkeit keines großen technischen Aufwands bedarf.

Für die Einrichtung der eingangs genannten Art wird diese Aufgabe dadurch gelöst, daß der Sensor dem gehäusefesten Teil des Tasters zugeordnet ist und ohne Antastvorgang unter vorbestimmtem, gleichbleibendem Druck stehend ein elektrisches Signal mit unverändertem Pegel, abgibt, dessen Änderung bei Zusammentreffen von Taster und Prüfling das Auslösesignal liefert.

Es erweist sich dabei als besonders vorteilhaft, wenn der kraft- oder beschleunigungsmessende Sensor einer Lagerstelle am gehäusefesten Teil zugeordnet ist.

Eine weitere Ausbildung der Erfindung sieht wor, daß wenigstens zwei kraft- oder beschleuningungsmessende sensoren vorhanden sind, die unterschiedlichen Lagerstellen des Knickgelenks am gehäusefesten Teil des Tasters zugeordnet sind.

Gemäß einer Weiterbildung der Erfindung kann aber auch vorgesehen sein, daß der beschleunigungsmessende sensor außen am gehäusefesten Teil angeordnet ist.

In der Zeichnung ist die Erfindung beispielsweise schematisch dargestellt und im Folgenden näher beschrieben.

Es zeigen:

Fig. 1 eine erfindungsgemäße Einrichtung mit Zähler (und Anzeige) und/oder mit Speicher (und Anzeige),

Fig. 2 ein Ausführungsbeispiel für einen mechanischen Taster,

Fig. 3 ein weiteres Ausführungsbeispiel für den zweiteiligen Taster.

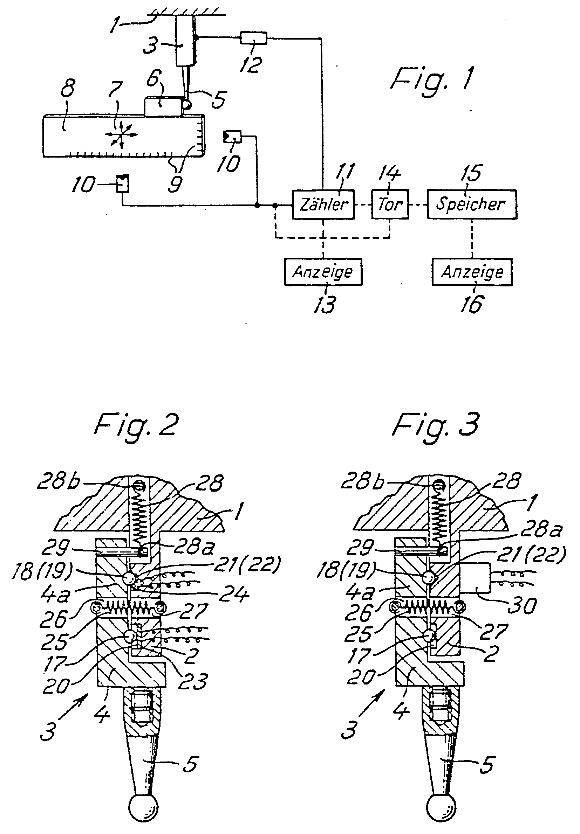

In Fig. 1 ist ein Ausführungsbeispiel einer Einrichtung zur Meßwerterfassung an Prüflingen schematisch dargestellt. Am Gehäuse 1 ist ein Knickgelenk 3 angesetzt. Gemäß der Fig. 2 und 3 besteht das Knickgelenk 3 aus einer mit dem Gehäuse 1 fest verbundenen Lagerplatte 2 und einer von dieser lösbaren Gelenkplatte 4. An der Gelenkplatte 4 ist ein Taster 5 befestigt. Mit dem Taster 5 wird bei der Messung ein Prüfling 6 angetastet. Dazu ist dieser auf einem in den Richtungen der Pfeile 7 verstellbaren Meßtisch 8 befestigt. Der Meßtisch 8 ist mit Teilungen 9 versehen, welche mit fotoelektrischen Empfängersystemen 10 zusammenwirkend Meßwertgeber bilden, von denen hier der Übersichtlichkeit wegen nur zwei dargestellt sind. Bei verschiebung des Meßtisches 8 in einer der Richtungen der Pfeile 7 verden von den Meßwertgebern elektrische Impulse erzeugt, die einen Zähler 11 steuern.

Zum Festhalten des Meßwertes, der zum Zeitpunkt der Berührung zwischen Taster 5 und Prüfling 6 im Zähler 11 ansteht, ist ein kraft- oder beschleunigungsmessender Sensor 12 vorgesehen und der dem Gehäuse 1 fest verbundenen Lagerplatte 2 zugeordnet. Im Berührungsaugenblick gibt dieser Sensor 12 ein Signal ab, welches ein Stoppen des Zählers 11 sowie gleichzeitig die Beendigung der Relativbewegung zwischen Taster 5 und Prüfling 6 bewirkt. Der Zählerstand kann nunmehr an einer Anzeigevorrichtung 13 als Meßwert abgelesen werden.

Soll der Wert des Zählers 11 gespeichert werden, so schaltet man, wie in Fig. 1 gestrichelt dargestellt, einen dafür vorgesehenen Speicher 15 über eine Torstufe 14 an den Zähler 11 an. Die Steuerung der Torstufe 14 kann zeitabhängig aus den Signalen der Meßwertgeber 9, 10 derart abgeleitet werden, daß der Wert des Zählers 11 erst eine bestimmte Zeit nach Abklingen der Relativbewegung zwischen Taster 5 und Prüfling 6, d. h. dem Nichtmehranfallen von Impulsen am Empfängersystem 10, in den Speicher 15 übernommen wird. Selbstverständlich kann der in den Speicher übernommene Wert von einer Anzeigevorrichtung 16 (gestrichelt angedeutet) angezeigt werden.

Eine mögliche Anbringung und Zuordnung des kraft- oder beschleunigungsmessenden Sensors 12 zeigt die Fig. 2.

Der Taster 5 ist an einer L-förmigen Gelenkplatte 4 des Knickgelenks 3 verschraubt. An der Innenseite des senkrecht stehenden Schenkels 4a der Gelenkplatte 4 sind Kugeln 17, 18 (19) fest eingelassen, von denen der Einfachheit halber nur zwei, nämlich 17 und 18, dargestellt sind. Die mit dem Gehäuse 1 fest verbundene Lagerplatte 2 trägt Vertiefungen 20, 21 (22), von denen ebenfalls nur zwei, 20 und 21, dargestellt sind. Die Vertiefung 20 ist zylindrisch, die Vertiefungen 21 bzw. 22 sind kegelförmig ausgebildet. In diesen Vertiefungen 20 bzw. 21 zind je ein kraft- oder beschleunigungsmessender Sensor 23 bzw. 24 montiert.

In diesen Vertiefungen 20—22 bzw. auf den kraft-oder beschleunigungsmessenden Sensor 23 und 24 lagert die Gelenkplatte 4 mit ihren Kugeln 17-19. Eine Zugfeder 25, welche durch miteinander fluchtende Bohrung 26 und 27 in der Gelenkplatte 4 und der Lagerplatte 2 gelegt ist, verbindet Gelenkplatte 4 und Lagerplatte 2 federnd und verursacht einen vorbestimmten gleichbleibenden Druck auf die Sensoren 23 bzw. 24. Diese erzeugen ein elektrisches Signal, dessen Pegel ohne Antastvorgang unverändert bleibt. Bei der Antastung des Werkstückes 6 verändert sich der Signalpegel. Aus dieser Änderung wird eine Impuls abgeleitet, welcher das Stoppen des Zählers 11 und die Abschaltung der Relativbewegung zwischen Taster 5 und Werkstück 6 bewirkt.

Der besondere Vorteil der soweit beschriebenen Einrichtung liegt in der hohen Reproduziergenauigkeit der Ausgangslage des Tasters 5.

Zum eventuell erforderlichen Ausgleich des Tastergewichtes kann eine oder mehrere Ausgleichsfeder(n) (28) vorgesehen sein, die mit ihrem(n) unteren Ende(n) 28a an einem in der Gelenkplatte 4 eingepressten Haltestift 29 und mit ihrem(n) oberen Ende(n) 28b in der Lagerplatte 2 eingehängt ist.

In Fig. 3 ist eine Alternativlösung dargestellt. Sie unterscheidet sich von der in Fig. 2 beschriebenen Lösung dadurch, daß anstelle der in den Vertiefungen 20 und 21 angeordneten kraft- oder beschleunigungsmessenden Sensoren 23 und 24 nur ein einziger beschleunigungsmessender Sensor 30 vorgesehen ist, welches außen an der mit dem Gehäuse 1 festverbundenen Lagerplatte 2 angebracht ist.

Dabei kann der beschleunigungsmessende Sensor 30 zu allen Meßachsen um 45° geneigt angeordnet sein, so daß beim Antasten des Werkstückes 6 die Amplituden der bei der Antastung erzeugten Signale möglichst gleiche Amplituden für alle Meßachsen haben.

## Patentansprüche

1. Einrichtung zur Meßwerterfassung an Prüflingen (6) unter Verwendung eines relativ zu diesem bewegten mechanischen, aus einem gehäusefesten (2) un einem mit diesem über ein Knickgelenk (3) verbundenen, bewegbaren Teil bestehenden Tasters (5), mindestens eines Meßwertgebers (9, 10, 11) sowie mindestens eines kraft- oder beschleunigungsaufnehmenden Sensors (12, 23, 24, 30), der im Augenblick des Zusammentreffens von Taster (5) und Prüfling (6) eine Auslösesignal erzeugt, das zum Festhalten des im Augenblick des zusammentreffens am Meßwertgeber (9, 10, 11) vorhandenen Meßwertes benutzt wird, dadurch gekennzeichnet, daß der Sensor dem gehäusefesten Teil (2) des Tasters (5) zugeordnet ist und ohne Antastvorgang unter vorbestimmtem, gleichbleibendem Druck stehend ein elektrisches Signal mit unverändertem Pegel abgibt, dessen Änderung bei Zusammentreffen von Taster (5) und Prüfling (6) das Auslösesignal liefert.

2. Einrichtung nach Anspruch 1, dadurch gekennzeichnet, daß der kraft- oder beschleunigungsmessende Sensor (12, 23, 24) einer Lagerstelle (20, 21, 22) des Knickgelenks (3) am gehäusefesten Teil (2) zugeordnet ist.

3. Einrichtung nach Anspruch 1, dadurch gekennzeichnet, daß wenigstens zwei kraft- oder beschleunigungsmessende Sensoren (23, 24) vorhanden sind, die unterschiedlichen Lagerstellen (20, 21, 22) des Knickgelenks (3) am gehäusefesten Teil (2) des Tasters (5) zugeordnet sind.

4. Einrichtung nach Anspruch 1, dadurch gekennzeichnet, daß der kraft- oder beschleunigungsmessende Sensor (30) außen am gehäusefesten Teil (2) angeordnet ist.

## Revendications

1. Dispositif d'acquisition de valeurs de mesure sur des échantillons à contrôler (6) avec utilisation d'un palpeur mécanique (5) mû par rapport à ceux-ci et consistant en un élément (2) solidaire du boîtier et en un élément mobile relié à celui-ci par l'intermédiaire d'une articulation pivotante (3) ainsi que d'au moins un capteur de mesure (9, 10, 11) et d'au moins un détecteur dynamométrique ou accélérométrique (12, 23, 24, 30), dans lequel dispositiv est produit, lors de la rencontre du palpeur (5) et de l'échantillon à contrôler (6), un signal de déclenchement qui est employé pour la fixation de la valeur de mesure existant dans le capteur de mesure (9, 10, 11) à l'instant de la rencontre, caractérisé en ce que le détecteur dynamométrique ou accélérométrique est associé à l'élément (2) solidaire du boîtier du palpeur (5) et sous compression constante délivre un signal constant dont la variation en vertu de la rencontre du palpeur (5) et de l'échantillon à contrôler (6) fournit le signal de déclenchement.

2. Dispositif selon la revendication 1, caractérisé en ce que le détecteur dynamométrique ou accélérométrique (12, 23, 24) est associe à un emplacement d'appui (20, 21, 22) de l'articulation pivotante (3) sur l'élément (2) solidaire du boîtier.

3. Dispositif selon la revendication 1, caractérisé en ce qu'il y a au moins deux détecteurs dynamométriques ou accélérométriques (23, 24) qui sont associés à des emplacements d'appui differents (20, 21, 22) de l'articulation pivotante (3) sur .l'élément (2) solidaire du boîtier du palpeur (5).

4. Dispositif selon la revendication 1, caractérisé en ce que le détecteur accélérométrique (12, 30) est disposé à l'extérieur sur l'élément (2) solidaire du boîtier.

## Claims

1. Apparatus for picking-up test data at test samples (6) using a mechanical feeler (5) moving relative to said test samples (6) and consisting of a housing fixed part (2) and of a movable articulating multiball and socket part (3) connected to said housing fixed part (2), and at least one incremental transducer (9, 10, 11) as well as at least one force or acceleration pick-up (12, 23, 24, 30) transmitting test data by generating a trigger signal at the time of impact between feeler (5) and test samples (6), said trigger signal being used for storing test data present at the incremental transducer (9, 10, 11) at the time of impact in a memory, the improvement comprising: said force or acceleration pick-up (12, 23, 24, 30) generating said trigger signal being mounted on said housing fixed part (2) of said mechanical feeler (5) and be prestressed by a predetermined constant pressure applied between said housing fixed part (2) and said articulating part (3), the level of the resulting electrical signal remaining unchanged in the absence of a sensing process and changing upon sensing said test samples (6).

2. The apparatus of claim 1, wherein said force or acceleration pick-up (12, 23, 24, 30) is mounted in a bearing (20, 21, 22) for the articulating multiball and socket part (3) of the housing fixed part (2).

3. The apparatus of claim 1, wherein at least two force or acceleration pick-ups (23, 24) are provided which are mounted in different bearings (20, 21, 22) for the articulating, multiball and socket part (3) of the housing fixed part (2).

4. The apparatus of claim 1, wherein said force or acceleration pick-up (30) is mounted on the outside of said housing fixed part (2).

**0 029 499**

*Fig. 1*

*Fig. 2*

*Fig. 3*